# EUROPÄISCHE PATENTSCHRIFT

(11) **EP 1 765 621 B1**
(45) Veröffentlichungstag und Bekanntmachung des Hinweises auf die Patenterteilung: **23.02.2011**
(21) Anmeldenummer: 05757985.6
(22) Anmeldetag: 06.07.2005
(51) Int. Cl.: B60J 5/04

(54) **TÜRMODEL FÜR EINE FAHRZEUGTÜR**
DOOR MODULE FOR A VEHICLE DOOR
MODULE DE PORTIERE POUR UNE PORTIERE DE VEHICULE

(30) Priorität: 06.07.2004 DE 102004033583
(43) Veröffentlichungstag der Anmeldung: 28.03.2007
(73) Patentinhaber: Faurecia Innenraum Systeme GmbH, 76767 Hagenbach (DE)
(72) Erfinder: SIELHORST, Bernhard, 36205 Sontra (DE)
(74) Vertreter: Pfenning, Meinig & Partner GbR
(86) Internationale Anmeldenummer: PCT/EP2005/007440
(87) Internationale Veröffentlichungsnummer: WO 2006/003024

(56) Entgegenhaltungen:
- EP-A- 0 955 191
- DE-A1- 10 125 555
- DE-C1- 3 545 856
- US-A- 4 182 078
- US-A1- 2005 160 675

## Beschreibung

Die Erfindung betrifft ein Tür- oder Seitenwandmodul aus Kunststoff für eine Fahrzeugtür bzw. Fahrzeugseitenwand zur Trennung einer Nassseite von einer Trockenseite nach dem Oberbegriff des Hauptanspruchs. Die Erfindung betrifft ferner eine Fensterheberanordnung, die ein solches Tür- oder Seitenwandmodul umfasst, und eine Fahrzeugtür mit einem solchen Türmodul bzw. einer solchen Fensterheberanordnung sowie ein Verfahren zur Herstellung eines entsprechenden Tür- oder Seitenwandmoduls.

Ein solches Tür- oder Seitenwandmodul dient zum einen zur Trennung einer Nassseite von einer Trockenseite in einer Fahrzeugtür bzw. -seitenwand, typischerweise in einer Tür oder Seitenwand eines Kraftfahrzeugs, und zum zweiten als Träger für einen Fensterhebemechanismus, der seinerseits dazu dient, eine zum Öffnen und Schließen eines Fensters beweglich, vorzugsweise verschiebbar, angeordnete Fensterscheibe anzutreiben. Bei herkömmlichen Türmodulen nach dem Stand der Technik ist es vorgesehen, dazu ein Getriebe an dem Türmodul anzuordnen, das eine mit einem Motor oder einem Kurbeltrieb verbundene Antriebswelle sowie eine Abtriebswelle aufweist, wobei die Abtriebswelle über eine Trommel einen Seilzug für die Fensterscheibe antreibt. Das Getriebe ist dabei typischerweise durch ein auf der Abtriebswelle angeordnetes Zahnrad und ein mit der Antriebswelle verbundenes Schneckenrad realisiert, die zusammen mit dem Motor einen Schneckentrieb bilden.

Derartige Schneckentriebe haben allerdings einen nachteilig schlechten Wirkungsgrad, womit Antriebsmotoren unverhältnismäßig hoher Leistung erforderlich werden. Ein entscheidender Nachteil von Fensterheberanordnungen beschriebener Art liegt aber in einem verhältnismäßig aufwendigen Aufbau, der neben dem als Träger fungierenden Türmodul eine hohe Zahl unabhängiger, beweglicher Teile erfordert, die eigens hergestellt und montiert werden müssen. Damit verbunden ist also einerseits ein großer Teilebedarf und andererseits ein hoher Montageaufwand.

Ein Türmodul, an das im Hinblick auf einen möglichst geringen Montageaufwand bereits ein Getriebeteil für einen Fensterheber angeformt ist, ist in der Druckschrift DE 101 25 555 A1 beschrieben. Durch die Verwendung einer flexiblen und verhältnismäßig langen Antriebswelle hat jedoch auch dieser Fensterheber keinen optimalen Wirkungsgrad.

Der Erfindung liegt also die Aufgabe zugrunde, ein entsprechendes Türmodul oder Seitenwandmodul und eine entsprechende Fensterheberanordnung sowie ein Herstellungsverfahren dafür zu entwickeln, mit denen diese Nachteile vermieden werden. Realisiert werden soll also ein als Träger für einen Fensterhebemechanismus dienendes Tür- oder Seitenwandmodul und eine ein solches Tür- oder Seitenwandmodul umfassende Fensterheberanordnung, mit denen sich bei einem möglichst geringen Herstellungsaufwand ein Fensterscheibenantrieb mit möglichst gutem Wirkungsgrad realisieren lässt.

Diese Aufgabe wird erfindungsgemäß gelöst durch ein Tür- oder Seitenwandmodul mit den Merkmalen des Hauptanspruchs, durch eine Fensterheberanordnung nach Anspruch 6 und durch eine Fahrzeugtür nach Anspruch 10 sowie durch ein Verfahren zur Herstellung eines entsprechenden Tür- oder Seitenwandmoduls nach Anspruch 11. Vorteilhafte Ausgestaltungen und Weiterentwicklungen der Erfindung ergeben sich mit den Merkmalen der Unteransprüche.

Ein in geforderter Weise einfacher Aufbau einer auf einem erfindungsgemäßen Tür- oder Seitenwandmodul aufbauenden Fensterheberanordnung ergibt sich dadurch, dass zumindest ein zum Fensterhebemechanismus gehöriges gezahntes Getriebeteil einstückig an das Tür- bzw. Seitenwandmodul angeformt ist.

Ein solches Tür- oder Seitenwandmodul kann in besonders einfacher Weise dadurch hergestellt werden, dass es in einem Spritzgussverfahren in einem Schuss zusammen mit dem Getriebeteil gegossen wird. Das in gewünschter Form gezahnte Getriebeteil kann dabei mit Hilfe einer entsprechend gestalteten Gießform realisiert werden. Ein anderes, ebenfalls einfaches Herstellungsverfahren sieht vor, dass das Getriebeteil an das Türmodul angespritzt wird. Wenn hier und weiter unten nur noch von Türmodulen die Rede ist, so gilt das Gesagte in gleicher Weise auch für Seitenwandmödule, die nicht in Türen eingebaut werden. Zum Anspritzen des Getriebeteils kann das zuvor beispielsweise in einem anderen Spritzgussprozess hergestellte Türmodul in eine eigens zum Spritzen des Getriebeteils vorgesehene Kavität eingelegt werden.

Möglich ist es aber auch, das Türmodul mit dem gezahnten Getriebeteil in einem Zweikomponenten-Spritzgussverfahren herzustellen, bei dem zwei verschiedene Kunststoffkomponenten in eine Kavität eingespritzt werden, so dass eine Kunststoffkomponente einen tragenden Teil des Türmoduls bildet, während das Getriebeteil durch eine andere Kunststoffkomponente gebildet wird. Dieses Herstellungsverfahren ist insbesondere dann von Vorteil, wenn die zuerst genannte Kunststoffkomponente, beispielsweise aufgrund eines Glasfasergehaltes, keine hinreichend präzise Realisierung einer Zahngeometrie des Getriebeteils erlaubt. Als zweite Kunststoffkomponente könnte dann beispielsweise ein Kunststoff ohne Faserverstärkung oder mit kürzeren Fasern zum Einsatz kommen.

Ein anderes Herstellungsverfahren für ein erfindungsgemäßes Türmodul sieht schließlich vor, dass das einstückig an das Türmodul anzuformende Getriebeteil durch Tiefziehen oder Prägen des Türmoduls realisiert wird. Das Türmodul könnte dann zuvor als Spritzgussteil hergestellt worden sein oder mit dem Getriebeteil zusammen in einem Spritzprägeverfahren oder durch Prägen oder Tiefziehen eines Halbzeugs hergestellt werden.

Den geschilderten Herstellungsverfahren gemeinsam ist ein verhältnismäßig geringer Aufwand für die Herstellung des Türmoduls mit dem dann einen integralen Bestandteil des Türmoduls bildenden Getriebeteil.

Besonders vorteilhaft ist es, das Türmodul zumindest teilweise aus Polypropylen oder Polyamid zu fertigen, beides Materialien, die sich einerseits besonders gut in beschriebener Weise verarbeiten lassen und andererseits eine hinreichend stabile Ausführung des Türmoduls erlauben. Eine hohe Stabilität des Türmoduls, die von Vorteil ist, weil das Türmodul insbesondere als Träger für den Fensterhebemechanismus fungieren soll, lässt sich auch dadurch realisieren, dass das Türmodul zumindest teilweise aus einem faserverstärkten Kunststoff gefertigt wird. Besonders kostengünstig lässt sich das durch eine Verwendung glasfaserverstärkten Kunststoffes verwirklichen, wobei eine Verwendung von langglasfaserverstärktem Kunststoff - vorzugsweise mit einem Glasfaseranteil von größenordnungsmäßig 30 Gewichtsprozent - mit Blick auf die Stabilität besonders vorteilhaft ist.

Die Erfindung sieht vor, dass ein Ring mit Innenverzahnung als Getriebeteil einstückig an das Türmodul angeformt ist. Der Ring mit Innenverzahnung soll dabei einen Teil eines Getriebes bilden, das zu dem entsprechenden Fensterhebemechanismus gehört, Wenn der Ring mit Innenverzahnung dabei an der Trockenseite des Türmoduls angeordnet ist, kann dieses Getriebe ebenfalls zumindest weitestgehend an der Trockenseite und dadurch in vorteilhafter Weise vor Spritzwasser geschützt angeordnet werden. Eine besonders vorteilhafte Fensterheberanordnung ergibt sich mit einem solchen Türmodul, wenn das Getriebe, von dem der Ring mit Innenverzahnung einen Bestandteil bildet, eine mit einem Motor oder einer Handkurbel verbundene Antriebswelle und eine Abtriebswelle zum Antrieb einer Zugvorrichtung für eine bewegliche Fensterscheibe aufweist. Wenn der Ring mit Innenverzahnung wie beschrieben an der Trockenseite angeordnet ist, kann die Abtriebswelle vorzugsweise das Türmodul durchstoßend und so von der Trockenseite auf die Nassseite führend ausgeführt werden. Eine Abdichtung der Abtriebswelle gegen das Türmodul, die ein Durchdringen von Wasser auf die Trockenseite vermeiden soll, lässt sich dabei verhältnismäßig einfach verwirklichen. Die Zugvorrichtung für die bewegliche, typischerweise verschiebbare, Fensterscheibe kann bei besonders unkomplizierten Ausführungen der Erfindung beispielsweise durch eine von der Abtriebswelle angetriebene und vorzugsweise auf der Abtriebswelle sitzende Trommel und ein über diese Trommel geführtes Zugseil, das über Führungs- und/oder Umlenkmittel mit der Fensterscheibe oder einem Mitnehmer für die Fensterscheibe verbunden sein kann, gegeben sein. Auch wäre es beispielsweise denkbar, durch die Abtriebswelle ein Ritzel anzutreiben, über das eine Kette geführt ist.

Es bietet sich an, das dem innen verzahnten Ring entsprechende Getriebe als Planetengetriebe auszuführen. Dann kann beispielsweise ein Sonnenrad dieses Planetengetriebes auf der Antriebswelle sitzen, während eine Halterung (auch "Korb" genannt) von auf diesem Sonnenrad und dem Ring mit der Innenverzahnung abrollendem Planetenrädern die Abtriebswelle antreibt. Möglich wäre auch eine umgekehrte Anordnung, also eine Vertauschung von An- und Abtriebswelle. Abhängig davon und je nach relativer Dimensionierung des Sonnenrads und der Planetenräder lässt sich damit eine gewünschte Untersetzung (bei einem Motorantrieb üblicherweise gefordert) oder auch eine (im Fall eines Handkurbeltriebs eventuell gewünschte) Übersetzung realisieren, wobei in jedem Fall eine Kraft- bzw. Drehmomentübertragung mit besonders gutem Wirkungsgrad erreicht wird.

Einen einfacheren, kostengünstigeren und damit besonders vorteilhaften Aufbau erhält man jedoch, wenn der Ring mit der Innenverzahnung einen Stützring eines so genannten Harmonic-Drive-Getriebes bildet. Derartige Harmonic-Drive-Getriebe, bei denen eine flexible, auβen verzahnte Abrollbuchse innen auf dem Stützring abrollt, dabei aber nur stellenweise am Stützring anliegt, wobei ein Antrieb des Getriebes über einen innerhalb der Abrollbuchse rotierenden Kern mit nicht konstantem Radius erfolgt, sind an sich aus anderen Anwendungen bekannt und zeichnen sich dadurch aus, bei einem sehr einfachen Aufbau zugleich ein hohes Untersetzungsverhältnis und einen besonders guten Wirkungsgrad zu ermöglichen. Bevorzugte Ausführungen derartiger Getriebe, die mit Blick auf den Wirkungsgrad und einen möglichst geringen Verschleiß besonders vorteilhaft sind, weisen dabei zwischen der Abrollbuchse und dem innerhalb der Abrollbuchse angeordneten Kern ein Kugellager oder Walzenlager auf. Bei der hier vorgeschlagenen Anwendung eines Harmonic-Drive-Getriebes für einen Fensterhebemechanismus kann die Abrollbuchse (realisiert beispielsweise durch ein in sich geschlossenes flexibles Zahnband) in besonders einfacher Weise direkt oder indirekt mit einer Abtriebswelle zum Antrieb einer Zugvorrichtung für die entsprechende Fensterscheibe verbunden sein.

Ein Türmodul bzw. eine Fensterheberanordnung der hier beschriebenen Art kann in besonders vorteilhafter Weise in einer Fahrzeugtür angeordnet werden. Möglich ist es aber auch, ein entsprechendes Seitenwandmodul dort in einer Fahrzeugseitenwand anzuordnen, wo diese zwar ein durch Verschieben einer Fensterscheibe zu öffnendes und zu schließendes Fenster, aber keine Tür aufweist. Sowohl die beschriebenen Ausführungen der Erfindung, bei denen ein innen verzahnter Ring ein angeformtes Getriebeteil bildet, zeichnen sich dabei dadurch aus, dass sie eine Realisierung von Fensterscheibenantrieben mit besonders gutem Wirkungsgrad erlauben, wodurch wiederum eine Verwendung schwächerer und damit kleinerer und billigerer Motoren ermöglicht wird.

Ausführungsbeispiele der Erfindung werden im Folgenden anhand der Figuren 1 bis 6 erläutert. Es zeigt
Fig. 1 eine schematische Darstellung einer Fahrzeugtür mit einem Türmodul in einer Ausführung der Erfindung,
Fig.2 eine Ansicht eines Ausschnitts des Türmoduls aus Fig. 4 und
Fig.3 einen Querschnitt durch ein Türmodul mit einem Fensterhebemechanismus in einer ähnlichen Ausführung der Erfindung.

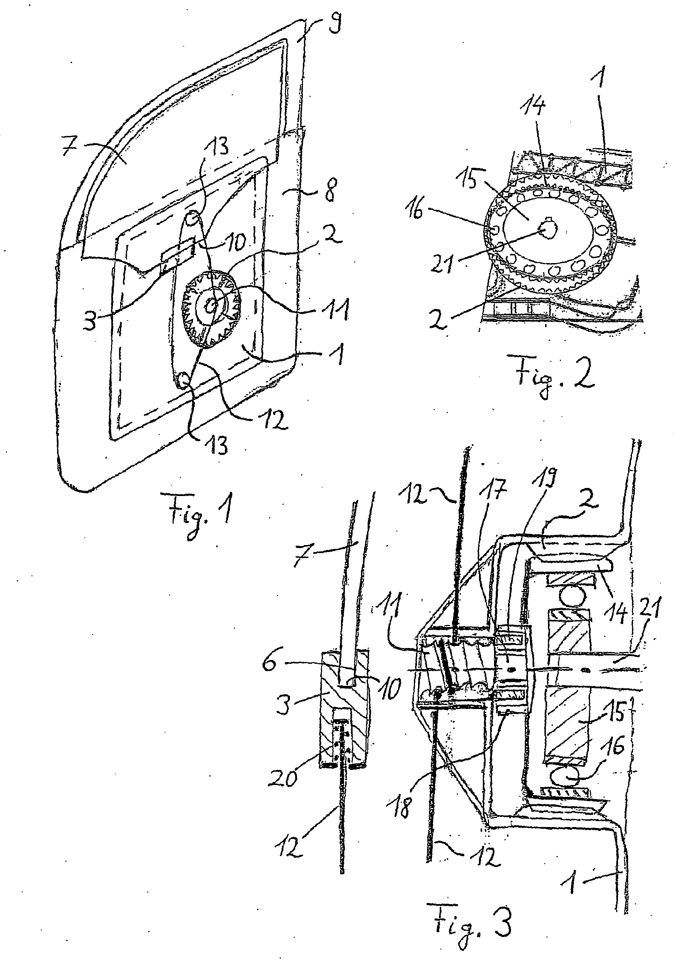

In der Fig.1 ist ein Teil einer Fahrzeugtür mit einem erfindungsgemäßen Türmodul 1 in einer anderen Ausführung abgebildet. Das Türmodul 1 ist an einem Türinnenblech 8 angeordnet und deckt so eine Öffnung in diesem Türinnenblech 8 ab. Eine Fensterscheibe 7, die bei geschlossenem Fenster an einem Tür- und Fensterrahmen 9 anliegt, ist zum Öffnen und Schließen abund aufwärts verschiebbar ausgeführt. Ein unterer Rand 10 der Fensterscheibe 7, der von einem Mitnehmer 3 gehalten wird, bewegt sich dabei an einer Nassseite des Türmoduls 1 entlang, also an einer Seite, die bei eingebauter Tür nach außen weist. Das Türmodul 1 dient dabei nicht nur zur Trennung der Nassseite von der bei eingebauter Tür zum Fahrzeuginnenraum hin weisenden Trockenseite, sondern auch als Träger für einen Fensterhebemechanismus, der eine Auf- und Abwärtsbewegung des Mitnehmers 3 und damit der Fensterscheibe 7 ermöglicht.

Dieser Fensterhebemechanismus umfasst ein Getriebe, das eine mit einem Elektromotor (anstelle des Elektromotors könnte auch ein Kurbeltrieb zum Einsatz kommen) verbundene Antriebswelle und eine Abtriebswelle zum Antrieb einer Zugvorrichtung für die bewegliche Fensterscheibe 7 aufweist. Die Zugvorrichtung besteht dabei aus einer auf der Abtriebswelle des Getriebes sitzenden Trommel 11, einem über diese Trommel 11 geführten Zugseil 12 und zwei Umlenkelementen 13 (im vorliegenden Fall Rollen), über die das Zugseil 12 ebenfalls geführt ist. Die zwei Enden des Zugseils 12 sind mit dem Mitnehmer 3 verbunden.

Ein Bestandteil des genannten Getriebes, nämlich ein als Ring mit Innenverzahnung ausgeführtes Getriebeteil 2 ist einstückig an das Türmodul 1 angeformt. Dieser Ring mit Innenverzahnung ist an der Trockenseite des Türmoduls angeordnet, liegt also von der Trockenseite her zugänglich. Bei dem genannten Getriebe handelt es sich um ein so genanntes Harmonic-Drive-Getriebe, wobei das genannte Getriebeteil 2, also der Ring mit Innenverzahnung einen Stützring dieses Harmonic-Drive-Getriebes bildet. Alternativ ist es auch möglich, das Getriebe als Planetengetriebe auszuführen, wobei der Ring mit Innenverzahnung dann als äußerer Zahnkranz dieses Planetengetriebes dient.

Das im vorliegenden Beispiel vorgesehene Harmonic-Drive-Getriebe ist in der Fig.2, die eine Ansicht der Trockenseite des Türmoduls 1 zeigt, noch einmal detaillierter abgebildet. Zu erkennen ist wieder das als Ring mit einer Innenverzahnung ausgeführte Getriebeteil 2, das einstückig an das Türmodul 1 angeformt ist. Innerhalb des Getriebeteils 2 ist eine flexible, außen verzahnte Abrollbuchse 14 angeordnet, die an zwei einander gegenüber liegenden Stellen durch einen innerhalb der Abrollbuchse 14 angeordneten ovalen Kern 15 an das als Stützring dienende Getriebeteil 2 gedrückt wird und dadurch dort an dem Stützring anliegt und mit der Innenverzahnung in Eingriff ist. Zwischen den Kern 15, der auf der mit dem genannten Elektromotor verbundenen Antriebswelle des Getriebes sitzt, und der Abrollbuchse 14 ist ein Kugellager 16 (auch ein Walzenlager kann verwendet werden) vorgesehen, das ein Drehen des Kerns 15 mit äuβerst geringen Reibungsverlusten erlaubt. Eine durch den Elektromotor verursachte Drehung des Kerns 15 hat nun zur Folge, dass die Stellen, an denen die Abrollbuchse 14 anliegt, radial umlaufen. Das zylindrische Getriebeteil 2 und die Abrollbuchse 14, die beide verzahnt sind, weisen Zähne in unterschiedlicher Zahl auf. Das hat zur Folge, dass mit einer Drehung des Kerns 15 auch eine Drehung der Abrollbuchse 14 erfolgt, wenn auch mit deutlich geringerer Drehgeschwindigkeit. Das Harmonic-Drive-Getriebe fungiert dadurch in gewünschter Weise als Untersetzungsgetriebe. Dabei ist die insbesondere in radialer Richtung flexible Abrollbuchse 14 mit einer hier nicht erkennbaren Abtriebswelle verbunden, auf der die schon erwähnte Trommel 11 sitzt.

Eine ähnliche Ausführung der Erfindung ist in der als Schnittzeichnung ausgeführten Fig.3 dargestellt. Wiederkehrende Merkmale sind hier wieder mit den gleichen Bezugszeichen versehen. Erkennbar ist hier die Abtriebswelle 17, die über einen Flansch 18 mit der flexiblen, außen verzahnten Abrollbuchse 14 sowie mit der Trommel 11 verbunden ist und das Türmodul 1 an einer Stelle durchstößt, an der das Türmodul 1 mit einer als Lager dienenden Gleitdichtung 19 versehen ist. Die Abtriebswelle 17 verbindet so das auf der Trockenseite (in der Fig.3 rechts) des Türmoduls 1 angeordnete Harmonic-Drive-Getriebe mit der auf der Nassseite (in der Fig.3 links) angeordneten Trommel 11, die zusammen mit dem Zugseil 12 und zwei in der Fig.3 nicht erkennbaren Umlenkelementen eine Zugvorrichtung zur Bewegung der Fensterscheibe 7 bildet. Erkennbar ist auch ein Ende des Zugseils 12, das über eine Spiralfeder 20 mit dem Mitnehmer 3 verbunden ist und diesen zum Öffnen der Fensterscheibe 7 nach unten ziehen kann. Ebenfalls zu erkennen ist eine Antriebswelle 21, auf der der Kern 15, der einen nicht konstanten Radius hat, sitzt und die das Harmonic-Drive-Getriebe mit einem hier nicht abgebildeten Motor verbindet.

Wie weiter oben erwähnt, ist es prinzipiell möglich, das Getriebe als Planetengetriebe auszuführen. Der Ring mit der Innenverzahnung dient dann als äußerer Zahnkranz dieses Planetengetriebes.

Allerdings ist in diesem Falle eine hohe Fertigungsgenauigkeit des Rings mit der Innenverzahnung notwendig, um die Funktion des Getriebes zu gewährleisten. Vorteilhafterweise ist der Kunststoff, aus dem der Ring mit der Innenverzahnung hergestellt ist, sehr abriebsfest, um einer Belastung der Innenverzahnung durch die Zahnräder des Planetengetriebes widerstehen zu können. Die Gefahr ist, dass im Laufe des Betriebes die Innenverzahnung durch die Zahnräder des Planetengetriebes abgerieben wird und das Getriebe funktionsuntüchtig wird.

Bei einem Harmonic-Drive-Getriebe ist dagegen eine gewisse fertigungstechnische Ungenauigkeit des Rings mit Innenverzahnung 2 unproblematisch. Durch die Flexibilität der Abrollbuchse 14, die vorteilhaft aus einem Gummi besteht, werden diese Ungenauigkeiten in einem gewissen Maße ausgeglichen.

Auch sind die Abriebskräfte, die durch die Abrollbuchse 14 auf die Innenverzahnung ausgeübt werden, im Gegensatz zum Planetengetriebe, gering. Dies gilt insbesondere dann, wenn die Abrollbuchse aus Gummi besteht. Es werden somit keine hohen Bedingungen an die Abriebsfestigkeit der Innenverzahnung gestellt.

Aus diesen genannten Gründen ist es besonders vorteilhaft, den erfindungsgemäß aus Kunststoff bestehenden einstückig an das Modul angeformten Ring mit Innenverzahnung 2 als Stützring für ein Harmonic-Drive-Getriebe auszubilden.

Bei den anhand der Figuren 1 bis 3 beschriebenen Ausführungsbeispielen der Erfindung ist das Türmodul 1 jeweils als mit dem Getriebeteil 2 in einem Schuss gegossenes Spritzgussteil ausgeführt. Die Herstellung erfolgt dabei in einer Spritzgussmaschine mit einer Kavität, die eine gewünschte Form des Türmoduls 1 mit dem Getriebeteil 2 wiedergibt. Türmodule 1 gleicher Art können auch durch ein Zweikomponenten-Spritzgussverfahren hergestellt werden, bei dem das Getriebeteil 2 durch eine andere Kunststoffkomponente gebildet wird als das eigentliche Türmodul 1, oder auch durch ein nachträgliches Anspritzen des Getriebeteils 2. Schließlich ist auch alternativ eine Herstellung derartiger Türmodule 1 durch Tiefziehen oder Prägen des Türmoduls 1 oder eines das Türmodul 1 bildenden Halbzeugs möglich.

## Patentansprüche

1. Tür- oder Seitenwandmodul (1) aus Kunststoff für eine Fahrzeugtür oder eine Fahrzeugseitenwand zur Trennung einer Nassseite von einer Trockenseite, wobei das Tür- bzw. Seitenwandmodul (1) einen Träger für einen Fensterhebemechanismus bildet und zumindest ein zum Fensterhebemechanismus gehöriges gezahntes Getriebeteil (2) einstückig an das Tür- bzw. Seitenwandmodul (1) angeformt ist,
**dadurch gekennzeichnet,**
**dass** ein Ring mit Innenverzahnung als Getriebeteil (2) einstückig an das Tür- oder Seitenwandmodul angeformt ist.

2. Tür- oder Seitenwandmodul (1) nach Anspruch 1, **dadurch gekennzeichnet, dass** es zumindest teilweise aus Polypropylen oder Polyamid besteht.

3. Tür- oder Seitenwandmodul (1) nach einem der Ansprüche 1 oder 2, **dadurch gekennzeichnet, dass** es zumindest teilweise aus einem faserverstärktem Kunststoff besteht.

4. Tür- oder Seitenwandmodul (1) nach einem der Ansprüche 1 bis 3, **dadurch gekennzeichnet, dass** es ein Spritzgussteil ist.

5. Tür- oder Seitenwandmodul (1) nach einem der Ansprüche 1 bis 4, **dadurch gekennzeichnet, dass** der Ring mit Innenverzahnung an der Trockenseite angeordnet ist.

6. Fensterheberanordnung umfassend ein Tür- oder Seitenwandmodul (1) nach einem der Ansprüche 1 bis 5.

7. Fensterheberanordnung nach Anspruch 6, **dadurch gekennzeichnet, dass** der Ring mit Innenverzahnung Bestandteil eines Getriebes ist, welches eine mit einem Motor oder einem Kurbeltrieb verbundene Antriebswelle (21) und eine Abtriebswelle (17) zum Antrieb einer Zugvorrichtung für eine bewegliche Fensterscheibe (7) aufweist.

8. Fensterheberanordnung nach einem der Ansprüche 6 oder 7, **dadurch gekennzeichnet, dass** der Ring mit Innenverzahnung ein äußerer Zahnkranz eines Planetengetriebes ist.

9. Fensterheberanordnung nach einem der Ansprüche 6 oder 7, **dadurch gekennzeichnet, dass** der Ring mit der Innenverzahnung ein Stützring eines Harmonic-Drive-Getriebes ist.

10. Fahrzeugtür enthaltend ein Türmodul (1) nach einem der Ansprüche 1 bis 5 oder eine Fensterheberanordnung nach einem der Ansprüche 6 bis 9.

11. Verfahren zur Herstellung eines Tür- oder Seitenmoduls (1) nach einem der Ansprüche 1 bis 5, **dadurch gekennzeichnet, dass** das Tür- bzw. Seitenwandmodul (1) in einem Spritzgussverfahren in einem Schuss mit dem Getriebeteil (2) gegossen wird oder dass das Getriebeteil (2) an das Türoder Seitenwandmodul (1) angespritzt wird oder dass das Getriebeteil (2) durch Tiefziehen oder Prägen des Tür- bzw. Seitenwandmoduls (1) oder eines flächigen Halbzeugs realisiert wird.

## Claims

1. Door module or side wall module (1) made of plastic material for a vehicle door or vehicle side wall for separating a wet side from a dry side, the door module or side wall module (1) forming a support for a window lifting mechanism, and at least one toothed transmission part (2) associated with the window lifting mechanism being moulded in one piece onto the door module or side wall module (1),
**characterised**
**in that** a ring with inner toothing is moulded in one piece onto the door module or side wall module as transmission part (2).

2. Door module or side wall module (1) according to Claim 1, **characterised in that** it is at least partially made of polypropylene or polyamide.

3. Door module or side wall module (1) according to one of Claim 1 or 2, **characterised in that** it is at least partially made of a fibre-reinforced plastic material.

4. Door module or side wall module (1) according to one of Claims 1 to 3, **characterised in that** it is an injection-moulded part.

5. Door module or side wall module (1) according to one of Claims 1 to 4, **characterised in that** the ring with inner toothing is arranged on the dry side.

6. Window lifter arrangement comprising a door module or side wall module (1) according to one of Claims 1 to 5.

7. Window lifter arrangement according to Claim 6, **characterised in that** the ring with inner toothing is part of a gear, the gear having a drive shaft (21), connected to a motor or a crank mechanism, and a driven shaft (17) for driving a pulling device for a movable window pane (7).

8. Window lifter arrangement according to one of Claim 6 or 7, **characterised in that** the ring with inner toothing is an external toothed ring of a planetary gear.

9. Window lifter arrangement according to one of Claim 6 or 7, **characterised in that** the ring with the inner toothing is a support ring of a harmonic drive transmission.

10. Vehicle door including a door module (1) according to one of Claims 1 to 5 or a window lifter arrangement according to one of Claims 6 to 9.

11. Method for producing a door module or side wall module (1) according to one of Claims 1 to 5, **characterised in that** the door module or side wall module (1) is moulded with the transmission part (2) in an injection-moulding process in one shot, or **in that** the transmission part (2) is injection-moulded onto the door module or side wall module (1), or **in that** the transmission part (2) is produced by thermoforming or stamping the door module or side wall module (1) or a flat semi-finished product.

## Revendications

1. Module de porte ou de panneau latéral (1) en matériau synthétique pour une portière ou un panneau latéral de véhicule automobile pour séparer un côté humide d'un côté sec, dans lequel le module de porte ou de panneau latéral (1) forme un support pour un mécanisme de levage de vitre et au moins une pièce d'engrenage dentée (2) appartenant au mécanisme de levage de vitre est moulée d'un seul tenant sur le module de porte ou de panneau latéral (1),
**caractérisé en ce que**
un anneau à denture interne comme pièce d'engrenage (2) est moulé d'un seul tenant sur le module de porte ou de panneau latéral.

2. Module de porte ou de panneau latéral (1) selon la revendication 1, **caractérisé en ce qu'**il est constitué au moins en partie de polypropylène ou de polyamide.

3. Module de porte ou de panneau latéral (1) selon l'une quelconque des revendications 1 ou 2, **caractérisé en ce qu'**il est constitué au moins en partie d'un matériau synthétique renforcé par des fibres.

4. Module de porte ou de panneau latéral (1) selon l'une quelconque des revendications 1 à 3, **caractérisé en ce qu'**il s'agit d'une pièce moulée par injection.

5. Module de porte ou de panneau latéral (1) selon l'une quelconque des revendications 1 à 4, **caractérisé en ce que** l'anneau à denture interne est agencé du côté sec.

6. Dispositif de levage de vitre, comprenant un module de porte ou de panneau latéral (1) selon l'une quelconque des revendications 1 à 5.

7. Dispositif de levage de vitre selon la revendication 6, **caractérisé en ce que** la bague à denture interne fait partie d'une transmission qui présente un arbre menant (21) raccordé à un moteur ou à une commande à manivelle et un arbre mené (17) pour entraîner un dispositif de traction pour une vitre de fenêtre mobile (7).

8. Dispositif de levage de vitre selon l'une quelconque des revendications 6 ou 7, **caractérisé en ce que** la bague à denture interne est une couronne dentée externe d'un engrenage planétaire.

9. Dispositif de levage de vitre selon l'une quelconque des revendications 6 ou 7, **caractérisé en ce que** la bague à denture interne est une bague d'appui d'une transmission de type Harmonic Drive.

10. Portière de véhicule automobile contenant un module de porte (1) selon l'une quelconque des revendications 1 à 5 ou un dispositif de levage de vitre selon l'une quelconque des revendications 6 à 9.

11. Procédé de fabrication d'un module de porte ou de panneau latéral (1) selon l'une quelconque des revendications 1 à 5, **caractérisé en ce que** le module de porte ou de panneau latéral (1) est coulé d'un seul tenant avec la pièce d'engrenage (2) par un procédé de moulage par injection ou **en ce que** la pièce d'engrenage (2) est moulée par injection sur le module de porte ou de panneau latéral (1) ou **en ce que** la pièce d'engrenage (2) est réalisée par emboutissage ou matriçage du module de porte ou de panneau latéral (1) ou d'un produit semi-fini plat.
